(19) Europäisches Patentamt

European Patent Office

Office européen des brevets

(11) Publication number: **0 423 962 A2**

# (12) EUROPEAN PATENT APPLICATION

(21) Application number: 90310635.9

(22) Date of filing: 28.09.90

(51) Int. Cl.5: **C08L 23/04**

(30) Priority: 29.09.89 JP 252099/89

(43) Date of publication of application:
24.04.91 Bulletin 91/17

(84) Designated Contracting States:
DE ES FR GB NL SE

(71) Applicant: NIPPON PETROCHEMICALS
COMPANY, LIMITED
3-1, Uchisaiwaicho 1-chome Chiyoda-ku
Tokyo(JP)

(72) Inventor: Ishikawa, Narumi
1110-2 Higashi-Fukai
Nagareyama-shi, Chiba-ken(JP)
Inventor: Takeuchi, Hidesuke
3-35-3, Okubo, Konan-ku
Yokohama-shi, Kanagawa-ken(JP)
Inventor: Kamiya, Tatsuyuki
438, Miyauchi, Nakahara-ku
Kawasaki-shi, Kanagawa-ken(JP)
Inventor: Kambe, Shigemitsu
3-2-11, Hama-cho, Kawasaki-ku
Kawasaki-shi, Kanagawa-ken(JP)

(74) Representative: Cropp, John Anthony David et
al
MATHYS & SQUIRE 10 Fleet Street
London, EC4Y 1AY(GB)

(54) Ethylene polymer compositions.

(57) An ethylene polymer composition suitable as gas pipe material. The ethylene polymer composition comprises two or more kinds of ethylene polymers different in average molecular weight, characterized in that:
   i) the portion not less than 500,000 in weight average molecular weight of said composition:
     a) has at least one short-chain branch per 1,000 carbon atoms, and
     b) does not contain a component having a crystallization temperature of not lower than 127°C as measured according to differential scanning calorimetry (DSC) using stepwise isothermal crystallization; and
   ii) a relative tie molecules concentration of said composition is not lower than 1.7.

EP 0 423 962 A2

## ETHYLENE POLYMER COMPOSITIONS

Background of the Invention

The present invention relates to ethylene polymer compositions and more particularly to ethylene polymer compositions superior in long-term performance typified by fracture-resistant life and particularly suitable as materials for gas pipes.

Since polyethylene gas pipes are used underground or within buildings over a long period, it is required for them to not only be chemically stable but also have superior short- and long-term performance in mechanical strength and other points. Above all, to what extent the pipe life can be guaranteed against residual strain based on stress imposed on the pipes during piping, against residual strain caused by diastrophism over a long period or earthquakes or against external and internal pressures applied to the pipes, is very important as an item of technical evaluation on the polyethylene resins used for the pipes.

In general. fractures of polyethylene resin moldings caused by stress are broadly classified into ductile fracture and brittle fracture. Ductile fracture is a fracture mode observed under a relatively large stress. It is presumed that as the molecular chain is stretched out, crystals which have been arranged in good order are unravelled, finally leading to fracture.

On the other hand, brittle fracture is a fracture mode developed under a relatively small stress corresponding to a stress level which is experienced in the actual use of a polyethylene gas pipe. It is presumed that an amorphous portion is gradually stretched out so becomes tense and tie molecules between crystals are pulled out from the crystals, thus resulting in fracture. (Tie molecules are amorphous polymer molecules located between crystalline lamellae). Phenomenonwise, a very small crack is formed and then grows until fracture. Long-term performance required for resin materials used for polyethylene gas pipes is evaluated in terms of a crack-growth preventing performance. i.e., stress cracking resistance.

In connection with the method for improving the stress cracking resistance of polyethylene resins, for example as described in Japanese Patent Laid Open No. 100444/1979, it is known to improve the environmental stress cracking resistance (ESCR) by increasing the molecular weight (in this case the melt flow rate (MFR) decreases) or by increasing the proportion of $\alpha$-olefin in a high molecular weight portion (in this case the number of branches increases and the density decreases).

Other methods for improving ESCR have been proposed in Japanese Patent Publication No. 22007/1970 (GB 1,031,869), Japanese Patent Publication No. 3215/1970, Japanese Patent Publication No. 11349/1971 (US 3,592,880), Japanese Patent Publication No. 42716/1973 (GB 1,233,599), Japanese Patent Publication No. 43378/1986 (JP 54-100444A) and Japanese Patent Publication No. 43379/1986.

However, known compositions so far proposed do not fully satisfy the long-term performance required for polyethylene gas pipes and the values of ESCR obtained have not been fully satisfied.

For example, since polyethylene gas pipes are formed by extrusion, it is necessary to give consideration to not only moldability and physical properties such as mechanical strength but also forming strain at injection, residual strain due to stress imposed on the pipes during piping, residual strain caused by diastrophism over a long period or earthquakes or influence of external and internal pressure applied to the pipes.

Further, there is a Japanese standard, JIS K6774, for polyethylene resins to be used for polyethylene gas pipes, and it is necessary to satisfy the conditions that MFR (g/10 min) should be Class A: 0.15 inclusive to 0.4 exclusive, Class B: 0.4 inclusive to 1.0 exclusive, Class C: 1.0 inclusive to 2.5 exclusive, and density should be 0.933 inclusive to 0.939 exclusive $g/cm^3$. Thus, it is impossible to optionally change the molecular weight and density and a limit is encountered in the method for improvement. Therefore, it is required to develop ethylene polymer compositions superior in long-term performance within various limitations as mentioned above. Hereinbefore, there has not been proposed materials fully satisfying the long-term performance (especially ESCR and hot internal pressure creep).

It is the object of the present invention to provide ethylene polymer compositions effective as materials for polyethylene gas pipes superior in long-term performance by using a method for determining properties of resin compositions superior in fracture-resistant life.

Summary of the Invention

As to the formation process of tie molecules which are considered effective for the prevention of brittle fracture, there are various opinions. But generally it is considered that the longer the molecular chain and the larger the number of branches and the wider and more uniform the dispersion of branches in each molecule, the easier the formation of tie molecules. Therefore, it is necessary to make sure that sufficient short-chain branches are introduced in a certain or higher molecular weight component and that they are dispersed uniformly.

In the case where a certain proportion of short-chain branches are distributed uniformly in the main chain, the maximum length of the ethylene straight-chain portion ought to be smaller inevitably as compared with the case where they are localized. The longer the ethylene straight-chain portion, the higher the temperature at which crystallization can be allowed to take place (that is, the higher the melting temperature), so conversely where a certain or higher proportion of short-chain branches are sufficiently dispersed uniformly, there will not occur crystallization over a relatively low temperature range. In other words, there is the possibility of the upper limit value of the crystallization (melting) temperature being employable as a measure of uniformity of the branches distribution.

A. Lustiger proposed a method for determining a relative tie molecules concentration and, using this method, studied the relation to the results of ESCR with respect to polyethylenes having different MFR values. He states that according to the results obtained, the smaller the MFR (the larger the molecular weight), the higher the tie molecules concentration and the more improved the ESCR (see "Tie Molecules in Polyethylene -Final Report", Gas Research Institute Report, 1985). The results thus obtained indicate that the determination of the tie molecules concentration will be very effective as a method for the estimation of ESCR.

Having taken note of the above point and made extensive studies, the present inventors found out that the long-term performance such as stress cracking resistance and hot internal pressure creep of a polyethylene resin can be estimated by controlling short-chain branches by combining a method for an upper limit of the melting temperature according to differential scanning calorimetry (DSC) using stepwise isothermal crystallization and the above method for determing the tie molecules concentration. In this way we accomplished the present invention.

More specifically. according to the present invention there is provided an ethylene polymer composition comprising two or more ethylene polymers having different average molecular weights, characterized in that i) the portion not less than 500,00 in weight average molecular weight of the composition, a) has at least one short-chain branch per 1.000 carbon atoms and b) does not contain a component having a crystalline temperature of not lower than 127°C as measured according to differential scanning calorimetry (DSC) using stepwise isothermal crystallization, and ii) a relative tie molecules concentration of the composition is not lower than 1.7.

Detailed Description of the Invention

Examples of ethylene polymers employable in the present invention include various polyethylenes and copolymers consisting mainly of ethylene. As ethylene-based copolymers, ethylene-$\alpha$-olefin copolymers are preferred. As preferred examples of the $\alpha$-olefin there are mentioned $\alpha$-olefins having 3 to 12 carbon atoms. Concrete examples are propylene, 1-butene, 4-methyl-1-pentene, 1-hexene, 1-octene, 1-decene, and 1-dodecene.

The ethylene polymer composition of the present invention is essentially not specially limited provided it has the above construction, but preferably it comprises two or more ethylene polymers referred to above and having different average molecular weights and contains at least a), as a highest molecular weight component, not less than 6 wt% of an ethylene polymer having an intrinsic viscosity of 4.5 to 10.0 dl/g in decalin at 135°C and a density of 0.910 to 0.930 g/cm$^3$ and b), as a lowest molecular weight component, not less than 20 wt% of an ethylene polymer having an intrinsic viscosity of 0.5 to 2.0 dl/g as determined in the same condition as above and a density of 0.938 to 0.970 g/cm$^3$. If the amount of component a) is smaller than 6 wt%, the amount of tie molecules in the ethylene polymer composition will be insufficient and so the brittle fracture preventing effect cannot be expected. On the other hand, if the amount of component b) is smaller than 20 wt%, the molecular weight of the ethylene polymer composition will be too high, thus causing a moldability problem.

As ethylene polymers used in the present invention there may be added an ethylene polymer having an intermediate average molecular weight in addition to the above components a) and b). For example, in addition to 10-40 wt% of component a) and 30-60 wt% of component b), there may be used, as a third component, 10-60 wt% of an ethylene polymer having an intrinsic viscosity of 1.0 to 2.5 dl/g in decalin at 135°C and a density of 0.910 to 0.930 g/cm$^3$, whereby melt properties and various other properties can be further improved.

The "portion not less than 500,000 in weight average molecular weight" as referred to herein has been so confirmed by first fractionating the ethylene polymer composition according to a known molecular weight fractionation method which utilizes the difference in solubility based on molecular weights in a mixed solvent, e.g. xylene-ethyl cellosolve, and then using gel permeation chromatography (GPC) for example.

The condition "has at least one short-chain branch per 1,000 carbon atoms" in the present invention can be confirmed by determining the number of short-chain branch per 1,000 carbon atoms in the main polymer chain, using $^{13}C$ NMR for example, with respect to the portion not less than 500,000 in weight average molecular weight in the ethylene polymer composition.

If the number of short-chain branches in the portion not less than 500,000 in weight average molecular weight in the ethylene polymer composition is less than one per 1,000 carbon atoms, the stress cracking resistance of the composition will be reduced.

The condition "does not contain a component having a crystallization temperature of not lower than 127°C as measured according to differential scanning calorimetry (DSC) using stepwise isothermal crystallization" in the present invention is concerned with uniformity of the distribution of short-chain branches as noted previously. The present inventors found out that in the case of using the following specific measuring method according to DSC, it is suitable to select an upper limit value of the crystallization temperature of 127°C as a measure of uniformity of the short-chain branches distribution.

According to the specific measuring method just referred to above, a sample constituted by the portion not less than 500,000 in weight average molecular weight in the ethylene polymer composition is set on a DCS device, melted completely at 200°C, then cooled to 137°C at a rate of 10°C/min, thereafter cooled to 132°C at a rate of 0.5°C/min and then held at this temperature for 120 min. The sample thus cooled is further cooled to 127°C at a rate of 0.5°C/min and then held at this temperature for 90 min. During these cooling operations to 127°C, whether a crystallized component is present or not is checked on the basis of behavior of heat generation.

In the case where a component having a crystallization temperature of not lower than 127°C is present in the portion not less than 500,000 in weight average molecular weight in the ethylene polymer composition, this is not desirable because the stress cracking resistance of the composition will be reduced.

The condition "a relative tie molecules concentration is not lower than 1.7" in the present invention indicates a relative tie molecules concentration as determined by the following method on the basis of the foregoing A. Lustiger's report. The present inventors found out that when a relative tie molecules concentration determined by the following method is not lower than 1.7, the long-term performance of the resulting ethylene polymer composition is improved to a remarkable extent.

According to the tie molecules concentration determining method just referred to above, pellets of the ethylene polymer composition are press-melted at 188°C for 5 minutes, then the melt is cooled at a rate of 66°C/min to form a film 0.076-0.102 thick, then a test piece of dogbone shape is punched from the film, and this test piece is stretched to 600% longitudinally at a rate of 5.1 mm/min. The thus-stretched sample is then subjected to ultraviolet radiation in a chlorine gas atmosphere, whereby an amorphous portion of the composition is chlorinated selectively to form carbon-chlorine bond. After this treatment, an absorbance at a wave number of 611 $cm^{-1}$ is measured using a polarization infrared spectrophotometer with respect to a necking-free site closest to a necking site, and the ratio (Ab⊥/Ab‖) of absorbance (Ab⊥) in the direction perpendicular to the stretching direction to that (Ab‖) in the direction parallel thereto is determined and defined to be a relative tie molecules concentration.

If the relative tie molecules concentration of the ethylene polymer composition is lower than 1.7, the stress cracking resistance of the composition will be reduced, so such concentration values lower than 1.7 are not desirable.

As a process for preparing the composition there may be used any known technique such as, for example, mixing, multi-stage polymerization, or a combination of both. As typical examples of mixing there are mentioned dry blending using a conventional kneader such as Henschel mixer, extruder, or Brabender, and melt-mixing.

In the composition there may be incorporated as necessary, in addition to ethylene polymers as main components, various fillers such as carbon black, calcium carbonate, silica, and metallic fibers, as well as conventional additives such as antioxidant, flame retardant, coloring agent, antistatic agent, lubricant, ultraviolet ray absorber, dispersant, and nucleating agent.

Because of improvement in the distribution of short-chain branches, the ethylene polymer composition of the present invention is remarkably superior in point of long-term performance typified by ESCR, and particularly it proved to exhibit an excellent long-term performance also as the material of polyethylene gas pipes.

A wide range of other utilization fields are expected, including various containers, household utensils, various pipes and piping parts, for which is required durability.

[Working Examples and Comparative Examples]

The present invention will be described below concretely in terms of working Examples and Comparative Examples, but it is to be understood that the present invention is not limited thereby.

In the standard (JIS K6774) relating to the materials of polyethylene gas pipes, with Class A conditions as a target, there was made adjustment of density and MFR.

The following testing and measuring methods were also used in addition to those described above.

| (Material Test) | |
|---|---|
| Density | JIS K6760 |
| MFR | JIS K6760 |
| Material environmental stress cracking test (ESCR) | JIS K6760 (shape of test piece: JIS K6774) |
| (Pipe Test) | |
| Long-term hot internal pressure creep test | JIS K6774 |
| Long-term environmental stress cracking test (long-term ESCR) | JIS K6774 |

Examples 1, 2 and Comparative Example 1

Three kinds of composition each comprising two kinds of ethylene-1-butene copolymer different in average molecular weight were prepared by a two-stage polymerization process. Properties and proportions of the components are as shown in Table 1.

With respect to the ethylene polymer compositions prepared, the number of short-chain branch and the amount of component having a crystallization temperature not lower than 127°C in the portion not less than 500,000 in weight average molecular weight, as well as a relative tie molecules concentration of each composition, were determined, the results of which are as set forth in Table 2.

A look at the table shows that the compositions obtained in the working examples of the present invention are extremely superior in ESCR, whereas the value of ESCR obtained in the comparative example is inferior.

Example 3 and Comparative Examples 2, 3

Three kinds of ethylene polymer composition each having 3.3 short-chain branches per 1,000 carbon atoms in the portion not less than 500,000 in weight average molecular weight were prepared each by mixing two kinds of ethylene-1-butene copolymer different in average molecular weight. The mixing was performed at a resin temperature of 210°C, using a twin-screw extruder having a screw diameter of 50 mm and a screw length/diameter ratio of 26. Properties and proportions of the components are as shown in Table 1.

With respect to the compositions prepared, the amount of component having a crystallization temperature of not lower than 127°C in the portion not less than 500,000 in weight average molecular weight and a relative tie molecules concentration of each composition were determined, the results of which are as set forth in Table 2.

From the table it is seen that the value of ESCR is inferior in the case where a component having a crystallization temperature of now lower than 127°C is present in the portion not less than 500,000 in weight average molecular weight.

5

Example 4 and Comparative Example 4

Two kinds of ethylene polymer composition different in the number of short-chain branches in the portion not less than 500,000 in weight average molecular weight were prepared each by mixing two kinds of ethylene-1-octene copolymer different in average molecular weight. The mixing was performed in the same way as in Example 3. Properties and proportions of the components are as shown in Table 1.

With respect to the compositions prepared, the number and short-chain branch and the amount of component having a crystallization temperature not lower than 127°C in the portion not less than 500,000 in weight average molecular weight, as well as a relative tie molecules concentration of each composition, were determined, the results of which are as set forth in Table 2.

A look at the table shows that when the number of short-chain branch is less than one per 1,000 carbon atoms, the value of ESCR is inferior.

Examples 5 - 8

Four kinds of ethylene polymer composition falling under the scope of the present invention were prepared by mixing two kinds of ethylene-1-butene copolymer different in average molecular weight. The mixing was performed in the same manner as Example 3. Properties and proportions of the components are as shown in Table 1.

The compositions prepared were formed into polyethylene gas pipes of No. 1, Designation 50 as defined in JIS K6774, using a green pigment commonly employed and a single screw extruder having a screw diameter of 65 mm, at a resin temperature of 200°C and a take-off speed of 60 cm/min. For sizing there was used a vacuum sizing device under water cooling. The materials were subjected to the same measurements as above, while the pipes were subjected to a long-term hot internal pressure creep test and a long-term environmental stress cracking test. In the pipe tests, five pipes were tested for each material and an average value was obtained therefrom. The results of these measurements and tests are as shown in Table 3.

From the table it is seen that the compositions according to the present invention are superior in ESCR and that the pipes produced from those compositions are also remarkably superior in point of long-term performance.

Examples 9, 10 and Comparative Examples 5, 6

Four kinds of ethylene polymer composition having different relative tie molecules concentrations were prepared each by mixing three kinds of ethylene-1-hexene copolymer different in average molecular weight. The mixing was performed in the same way as in Example 3. Properties and proportions of the components are as set forth in Table 1.

The compositions thus prepared were formed into pipes of No. 1, Designation 50 as defined by JIS in the same manner as in Examples 5-8. The materials and the pipes were subjected to the same measurements and tests as in Examples 5-8, the results of which are as shown in Table 3.

Reference to Table 3 shows that the materials and pipes not lower than 1.7 in a relative tie molecules concentration are remarkably superior in ESCR and long-term performance, respectively, while those lower in the said concentration are inferior.

Table 1

| | $\alpha$-Olefin | Preparing Method | High Molecular Weight Component | | | Medium Molecular Weight Component | | | Low Molecular Weight Component | | |
|---|---|---|---|---|---|---|---|---|---|---|---|
| | | | Intrinsic Viscosity | Density (g/cm$^3$) | Proportion (wt%) | Intrinsic Viscosity (dl/g) | Density (g/cm$^3$) | Proportion (wt%) | Intrinsic Viscosity (dl/g) | Density (g/cm$^3$) | Proportion (wt%) |
| Ex. 1 | 1-butene | Two-stage Polymerization | 5.2 | 0.920 | 28 | - | - | - | 0.9 | 0.945 | 72 |
| Ex. 2 | | | 5.1 | 0.923 | 25 | | | | 1.1 | 0.943 | 75 |
| Comp. Ex. 1 | | | 4.9 | 0.950 | 22 | | | | 1.3 | 0.935 | 78 |
| Ex. 3 | 1-butene | Mixing | 4.8 | 0.918 | 21 | - | - | - | 1.4 | 0.943 | 79 |
| Comp. Ex. 2 | | | 4.6 | 0.919 | 22 | | | | 1.4 | 0.943 | 78 |
| Comp. Ex. 3 | | | 4.6 | 0.921 | 24 | | | | 1.3 | 0.943 | 76 |
| Ex. 4 | 1-octene | Mixing | 5.1 | 0.925 | 23 | - | - | - | 1.2 | 0.942 | 77 |
| Comp. Ex. 4 | | | 3.8 | 0.931 | 41 | | | | 1.1 | 0.943 | 59 |
| Ex. 5 | 1-butene | Mixing | 6.5 | 0.919 | 16 | - | - | - | 1.4 | 0.942 | 84 |
| Ex. 6 | | | 5.7 | 0.921 | 27 | | | | 0.9 | 0.944 | 73 |
| Ex. 7 | | | 5.1 | 0.922 | 25 | | | | 1.1 | 0.943 | 75 |
| Ex. 8 | | | 4.9 | 0.920 | 32 | | | | 0.8 | 0.946 | 68 |
| Ex. 9 | 1-hexene | Mixing | 8.0 | 0.920 | 11 | 1.5 | 0.928 | 53 | 0.7 | 0.958 | 36 |
| Ex. 10 | | | 7.2 | 0.925 | 14 | 1.7 | 0.927 | 30 | 0.7 | 0.947 | 56 |
| Comp. Ex. 5 | | | 5.0 | 0.921 | 4 | 2.5 | 0.937 | 65 | 0.5 | 0.942 | 31 |
| Comp. Ex. 6 | | | 6.3 | 0.923 | 1 | 2.1 | 0.942 | 88 | 0.7 | 0.907 | 11 |

EP 0 423 962 A2

Table 2

| | Properties of Composition | | | | | |
|---|---|---|---|---|---|---|
| | Component not less than 500,000 in weight average molecular weight | | | | | |
| | Density $(g/cm^3)$ | MFR $(g/10min)$ | Number of Branch $(pc./1,000C)$ | Amount of component crystallizing at $127^\circ$ C or higher (*) | Relative Tie Molecules Concentration | ESCR $F_{50}$ $(50^\circ$ C) (hr) |
| Ex. 1 | 0.938 | 0.19 | 3.7 | none (0) | 2.0 | > 5,000 |
| Ex. 2 | 0.938 | 0.19 | 2.6 | none (0) | 1.9 | > 5,000 |
| Comp. Ex. 1 | 0.938 | 0.20 | 1.6 | large amount (74) | 1.6 | 2,000 |
| Ex. 3 | 0.938 | 0.20 | 3.3 | none (0) | 1.8 | > 5,000 |
| Comp. Ex. 2 | 0.938 | 0.20 | 3.3 | small amount (15) | 1.7 | 4,300 |
| Comp. Ex. 3 | 0.938 | 0.20 | 3.3 | large amount (66) | 1.7 | 3,200 |
| Ex. 4 | 0.938 | 0.2 | 1.2 | none (0) | 1.8 | > 5,000 |
| Comp. Ex. 4 | 0.938 | 0.2 | 0.8 | none (0) | 1.7 | 3,100 |

(*) heat of fusion of crystallizing component (J.g)

Table 3

| | Properties of Composition | | | | | | Pipe Test | |
| | Component not less than 500,000 in weight average molecular weight | | | | | | | |
| | Density (g/cm$^3$) | MFR (g/10min) | Number of Branch (pc./1,000C) | Amount of component crystallizing at 127°C or higher (*) | Relative Tie Molecules Concentration | ESCR F$_{50}$ (50°C) (hr) | Long-term hot internal pressure creep test (80°C) (hr) | Long-term ESCR (50°C) (hr) |
|---|---|---|---|---|---|---|---|---|
| Ex. 5 | 0.938 | 0.21 | 4.0 | none (0) | 2.2 | > 5,000 | 15,700 | 20,500 |
| Ex. 6 | 0.938 | 0.19 | 3.9 | none (0) | 2.1 | > 5,000 | 12,100 | 20,100 |
| Ex. 7 | 0.938 | 0.22 | 3.8 | none (0) | 2.1 | > 5,000 | 12,300 | 19,100 |
| Ex. 8 | 0.938 | 0.22 | 3.8 | none (0) | 2.0 | > 5,000 | 14,500 | 19,900 |
| Ex. 9 | 0.938 | 0.39 | 4.2 | none (0) | 2.2 | > 5,000 | 2,550 | > 5,000 |
| Ex. 10 | 0.938 | 0.39 | 4.0 | none (0) | 1.9 | > 5,000 | 1,660 | > 5,000 |
| Comp. Ex. 5 | 0.938 | 0.39 | 3.8 | none (0) | 1.4 | 380 | 355 | 600 |
| Comp. Ex. 6 | 0.938 | 0.39 | 3.8 | none (0) | 1.2 | 50 | 133 | 85 |

**Claims**

1. An ethylene polymer composition comprising two or more kinds of ethylene polymers different in average molecular weight, characterized in that:
   i) the portion not less than 500,000 in weight average molecular weight of said composition:
      a) has at least one short-chain branch per 1,000 carbon atoms, and
      b) does not contain a component having a crystallization temperature of not lower than 127°C as measured according to differential scanning calorimetry (DSC) using stepwise isothermal crystallization; and
   ii) a relative tie molecules concentration of said composition is not lower than 1.7.

2. An ethylene polymer composition as set forth in claim 1, containing at least;
   a) as a highest molecular weight component, not less than 6% by weight of an ethylene polymer having an intrinsic viscosity of 4.5 to 10.0 dl/g in decalin at 135°C and a density of 0.910 to 0.930 g/cm³, and
   b) as a lowest molecular weight component, not less than 20% by weight of an ethylene polymer having an intrinsic viscosity of 0.5 to 2.0 dl/g in decalin at 135°C and a density of 0.938 to 0.970 g/cm³.

3. Use of the ethylene polymer composition of claim 1 or claim 2 as the material for gas pipes.